# EUROPEAN PATENT SPECIFICATION

(11) **EP 1 220 758 B1**
(45) Date of publication and mention of the grant of the patent: **20.04.2005**
(21) Application number: 00969339.1
(22) Date of filing: 28.09.2000
(51) Int. Cl.: B60J 5/04, B62D 65/00

(54) **VEHICLE DOOR AND ASSEMBLING METHOD AS WELL AS DISASSEMBLING METHOD FOR THE SAME**
FAHRZEUGTÜR UND VERFAHREN ZUM MONTIEREN UND DEMONTIEREN DIESER TÜR
PORTIERE DE VEHICULE, SON PROCEDE DE MONTAGE ET DE DEMONTAGE

(30) Priority: 28.09.1999 DE 19946307
(43) Date of publication of application: 10.07.2002
(73) Proprietor: ArvinMeritor GmbH, 63128 Dietzenbach (DE)
(72) Inventor: GRIMM, Rainer, 60599 Frankfurt (DE); KÖLLNER, Harald, 63674 Altenstadt (DE); STRAUSS, Klaus-Dieter, 38110 Braunschweig (DE); WURM, Georg, 61350 Bad Homburg (DE); DREWNIOK, Daniel, 60385 Frankfurt (DE); HERWIG, Arnd, G., 96148 Baunach (DE); HOF, Patrick, 35043 Marburg (DE); DOBSON, Simon, Blair, Folkestone, Kent CT20 3TA (GB); KEYES, Gregory, Birmingham B20 2LJ (GB); SCHANG, Kenneth, W., Plymouth, MI 48170 (US)
(74) Representative: GROSSE BOCKHORNI SCHUMACHER
(86) International application number: PCT/EP2000/009525
(87) International publication number: WO 2001/023200

(56) References cited:
- EP-A- 0 579 006
- DE-A- 3 004 897
- US-A- 4 704 822

## Description

The invention refers to a vehicle door with the characteristics of the preamble of Claim 1, known from EP-A-0 579 006, as well as an assembling method for the same according to Claim 11 and a disassembling method for the same according to Claim 12. This may involve driver, passenger, rear side or rear doors as well as both pivoting and sliding doors, in which, therefore, pivoting or sliding hinges are used for opening, for example.

In conventional vehicle doors it is common to join a support element constituting the supporting structure to the outer panel by peripheral welding, flanging or glueing, and to install the vehicle door in this state, with or without functional parts, such as lock, hinges, window lifter and the like, already installed to the support element, to the door opening of the vehicle which is to be closed off. The connection takes place in the hinge area. The so-called setting of the door is an assembly process requiring considerable experience, since the door must sit precisely positioned in all three spatial coordinates. For instance, vehicle doors are supposed to have a uniform gap with respect to the chassis in the X and Z directions (longitudinal and vertical directions of the vehicle). In the Y direction (transverse direction of the vehicle), the outer surface of the door should be as flush as possible with the rest of the car body. Therefore, the positioning accuracy must be visually checked after a preliminary installation of the vehicle door in the body and the door must be realigned in the body if necessary. In case the equipping of the door with functional parts such as window lifters and the like takes place only after the setting of the door in the body is finished, the subsequent weight increase of the door and thus a possibly changing position of the door with respect to the body must be taken into account during the initial setting of the door. Installation work in case of repairs to the vehicle door is equally difficult.

A corresponding vehicle of this class is already known from DE-A1-30 04 897 showing an outer panel element rigidly screwed together with a support element. Therefore, the entire adjusting work is to be made with the support element.

Proceeding from this, the invention is based on the object of achieving an easing of the perfectly fitted assembling for vehicle doors of this class.

This problem is solved by a vehicle door with the characteristics of Claim 1 as well as the corresponding assembling method according to Claim 11 and the disassembling method according to Claim 12.

By employing at least one adjustable spacer element that takes effect between the outer panel element and the support element, final manufacturing tolerances or a possibly not 100% aligned installation of the support element is compensated. Preferably, a settable plastic that is applied in the not-yet set state to the support element, the outer panel element or a possible stiffening element of sufficient material strength is used as the spacer element. If the outer panel element is now moved towards the support element with the support element already installed in the chassis then, shortly before it reaches the desired installation position, the settable plastic comes into contact with the respective opposite component. The outer panel element is then moved into its desired final position, in which the peripheral gaps and the flushness exhibit the desired values. Since the outer panel element, preferably already surface-treated in this state, can be extraordinarily light, simple, in particular, automatable, handling devices for moving, holding and adjusting the outer panel element can be used. After reaching the desired final position, the outer panel element is held in this position long enough for the plastic to set sufficiently and thus the desired final dimension is in a sense "frozen in." Any tolerances between outer panel and support element are thus compensated for by the resulting final dimension of the spacer element, in particular, the settable plastic.

However, pure mechanical means as telescopic means like spacer bushes, for instance, can be considered as spacer elements. These mechanical means include fastening means such as screws or the like, in order to fix the outer panel in the assembled state. Specifically, spacer elements being effective in two, preferably in three, directions of space are preferred. This can be easily achieved by spacer elements made from settable plastic.

It is particularly preferable for the spacer element to also take on a fastening function. With settable plastic as a spacer element, therefore, an adhesion can also be brought about, if desired.

Heat-sensitive spacer elements as thermoplasts or hot-melt-type adhesive allow a readjusting and/or disengageable connection of the outer panel with the support element or the stiffening element. Heating means for readjusting the heat-sensitive spacer elements or disengaging the outer panel can be placed nearby the heat-sensitive spacer elements as well as can be integrated into the vehicle door.

The outer panel element can be kept very thin-walled, so that it is very flexible in the initial assembly. Likewise, the support element as such can be designed with respect to its stiffness such that this stiffness does not suffice by itself for the finished vehicle door. In the first case as well as in the second case, and also if both cases apply, the ultimately desired stiffness can be achieved by at least one, and preferably several, elongated stiffening elements, preferably linked together in the form of a frame, for the outer panel element and/or the support element. To this end, the stiffening element is preferably provided in the peripheral area of the service opening.

If such a stiffening element can be detachably joined to the support element, this has the effect, first of all, that the stiffening element can already be joined to the support element while setting the support element in the chassis, that is to say, its weight is taken into account during alignment and its stiffening effect is exerted on the support element. If in this case the outer panel element is joined to the stiffening element during the later closing of the service opening essentially to maintain a spacing, then the contact surface between stiffening element and support element serves as a later separation plane in case of maintenance work or the like on the functional parts of the door that may be necessary. Since the stiffening element is joined to the outer panel element in this case in a manner that fits - the specific door opening - perfectly, the stiffening element constitutes a structural unit with the outer panel element after initial assembly. Due to the detachability of the stiffening element from the support element, then, this component can later be removed as a complete assembly, with the stiffening element providing the relatively thin-walled outer panel element with sufficient stiffness that, even under shop conditions, an exposure of the service opening and subsequent reclosure is possible without problems.

The support element equipped with all functional parts can be inserted into the chassis and connected to it before the outer panel is applied. The equipping of the support element with functional parts can also take place before and/or after fastening the support element to the chassis and an alignment of the support element with respect to the chassis can be carried out in a single work sequence without opening and again closing the support element. The adjustment of the support element can be accomplished with the aid of assembly blocks known from other fields, which indicate the final dimensions reached after the later placement of the outer panel element. The connecting of the support element with the outer panel element can take place in various ways, for instance, by blind bolting (bolting from the inside) and/or by glueing together.

The aforementioned components to be used according to the invention, as well as those claimed and described in the embodiments, are not subject to any special requirements regarding their size, shaping, material selection or technical conception, so that the selection criteria familiar in the respective field of application can be applied without restriction within the scope of the claims.

Additional details, characteristics and advantages of the object of the invention result from the subordinate claims as well as the description below of the associated drawing in which, for the sake of example, preferred embodiments of the vehicle door are presented. Shown in the drawing are:
- Figure 1: a vehicle with the driver-side door, partially in an exploded view;
- Figure 2: a passenger-side door for the same vehicle, partially in an exploded view;
- Figure 3A: the vehicle door of Figure 1 in a horizontal sectional representation (in part) - section along the line IIIA-IIIA according to Figure 1;

- Figure 3B: an additional horizontal section (in part) of the same vehicle doorsection along line IIIB-IIIB according to Figure 1;
- Figure 4: a vertical sectional view of the door of Figure 1 or Figure 2 in the sill area with a raised window pane;
- Figure 5: an alternative embodiment of a vehicle door in vertical section through the lower area (rocker panel area);
- Figure 6: a vehicle door with mechanical spacer elements being effective in three dimensions of space;
- Figure 7: a vehicle door with a integrated disassembling device.

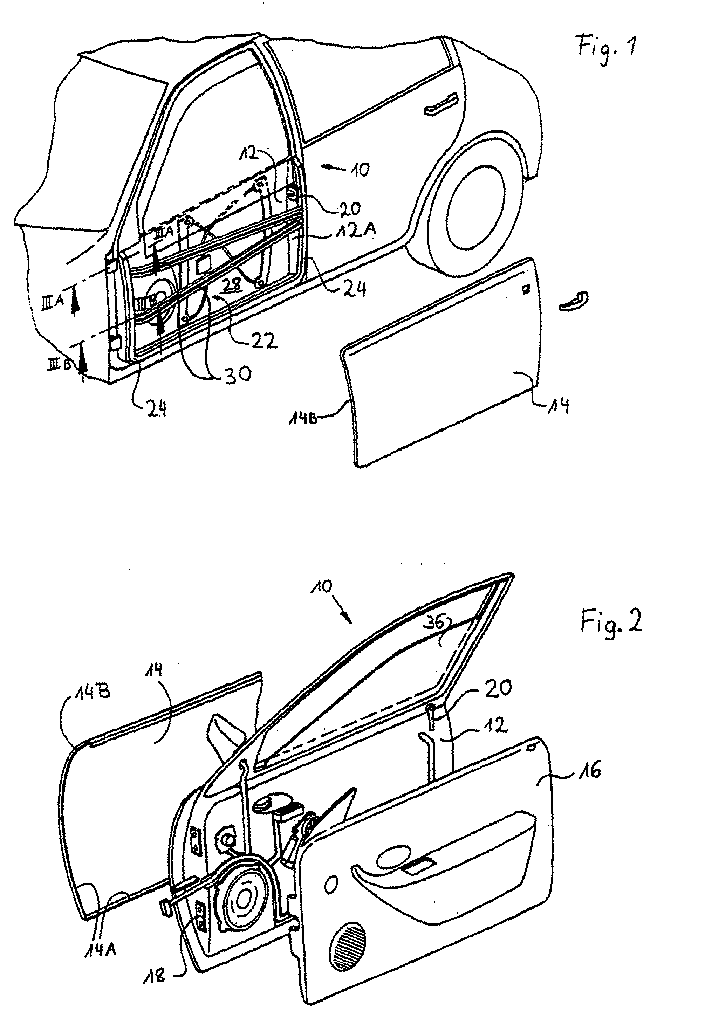

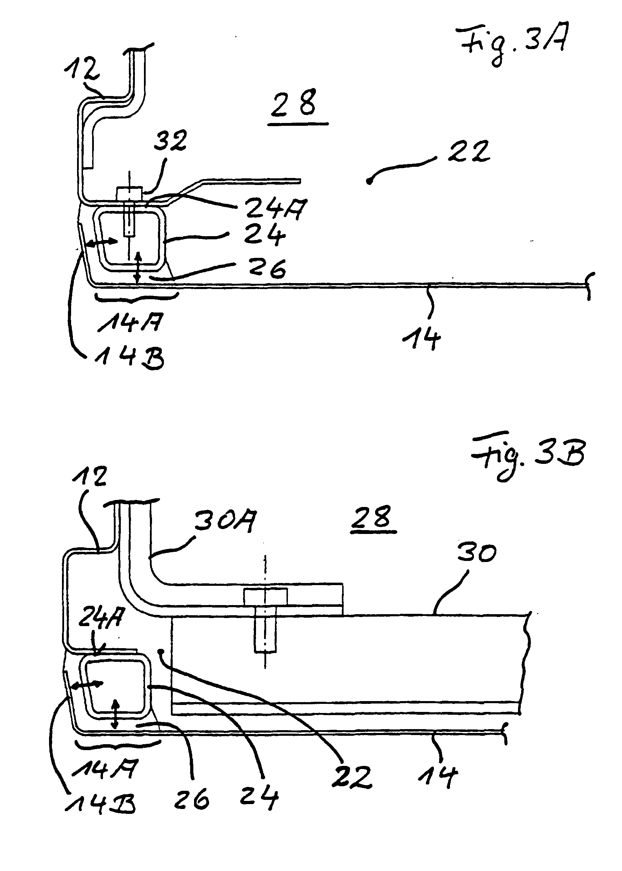

As is best seen from Figure 2, a vehicle door, here a passenger door, has a support element 12 of sheet metal, which is designed as a deep-drawn part and is essentially free of openings, or in which any openings can be tightly covered, in order to obtain a dry space for electrical components on the vehicle interior side of support element 12. This inner side is covered by a conventional interior panel element 16, made of plastic, for instance. As is further evident from Figures 1 and 2, the outer panel element 14 represents an independent component, which is put in place on the support element from the outside only after the installation of the preferably already completely equipped support element 12 in the vehicle chassis and after alignment has been performed. As is additionally visible from Figure 1, various functional parts such as hinges 18, a closure element 20, a side-impact beam 30 and stiffening elements 24 are accessible on the outside 12A of the support element 12.

In order that the vehicle door can be initially installed in the vehicle chassis without an outer panel element 14 and aligned there, the support element 12 has a large service opening 22, which is surrounded by a frame-shaped stiffening element 24, on its outer side 12A.

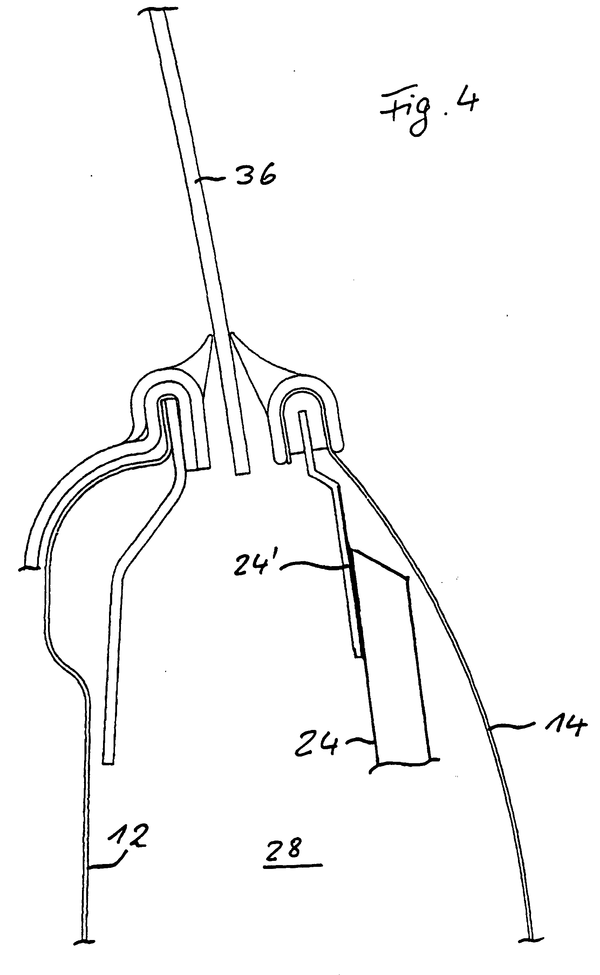

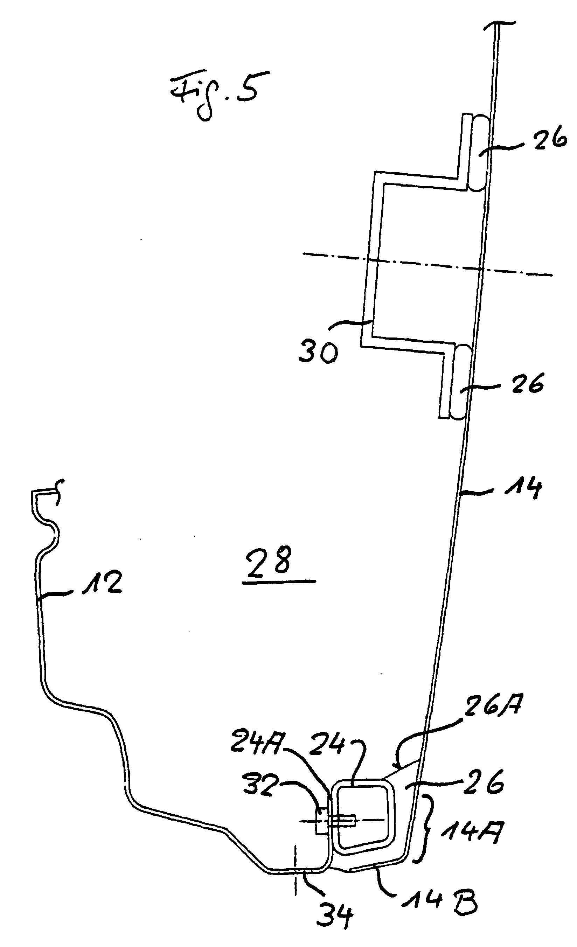

As is evident from Figures 3A-5 in detail, the stiffening element 24 consists of an essentially frame-shaped structure whose spanned area corresponds roughly to the opaque part of the door, that is, the part not having a window pane. In the area of the A-pillar, the B-pillar and for the C-pillar of the vehicle, as well as in the rocker panel area (Figure 5), the stiffening element 24 consists of a tube of roughly trapezoidal cross section. The sill area (Figure 4) consists of a so-called shaft reinforcement 24'. In the corner areas, the four stiffening elements 24, 24' are rigidly connected, not shown in further detail.

According to Figure 3A and Figure 3B the stiffening element 24 has a continuous sealing surface 24A, with which it can be joined to the outer panel element 14 in the edge area 14A. An adjustable-thickness spacer element 26 of hardenable plastic, in particular of a heat-sensitive plastic, reversible as a hot-melt-type adhesive, is used for this joint. The stiffening element 24, moreover, can be detachably bolted to the support element 12 from the inside with bolts 32. During the setting and alignment of the support element in the vehicle chassis, the stiffening element 24 is already firmly bolted to the support element 12, while the outer panel element 14 is still absent. Conventional alignment screws for the door are accessible from the outside through the service opening 22. After the end of this alignment process, the outer panel element 14, which is an already finish-painted deep-drawn piece of, for instance, sheet metal, provided with angled flanges 14B, is moved up to the stiffening element 24 with conventionally known handling equipment. Previously, the outside of the stiffening element 24 or the inside of the outer panel element 14 in the area of the edges is continuously coated, at least in the area of A-, B- and/or C-pillars and the rocker panel with overdimension, with not-yet reacted and sufficiently thixotropic adhesive with filling and sealing characteristics. After the outer panel element 14 has been brought into its final position shown in Figure 3A, it is held there for sufficient time for the plastic that constitutes the spacing element 26 to adequately harden. Thus, the vehicle door 10 is closed off water-tight against the outside. In case of repairs, the bolts 32 must be loosened from the inside and the spacing element 26 cut free at its narrow contact face with the support element 12 in order to be able to remove the outer panel element 14 together with the stiffening elements 24.

A side-impact beam 30, as shown in Figure 3B, can be fastened to the support element 12 by means of angle brackets 30A without any resulting physical contact with the outer panel element 14. The side-impact beam 30, however, can equally well be joined in a precisely fitted manner to the outer panel element 14 by additional spacing elements 26, in the same manner as the stiffening element 24. In the rocker panel area, inclined run-off surfaces 26A of the spacing element 26 ensure that any condensate or penetrating water can run off via known drainage holes 34.

Fig. 6 shows the embodiment of Fig. 3A - with exception of the spacing element, which exists of two or three mechanical spacer means 26D in Fig. 6, being of adjustable and fixable length.

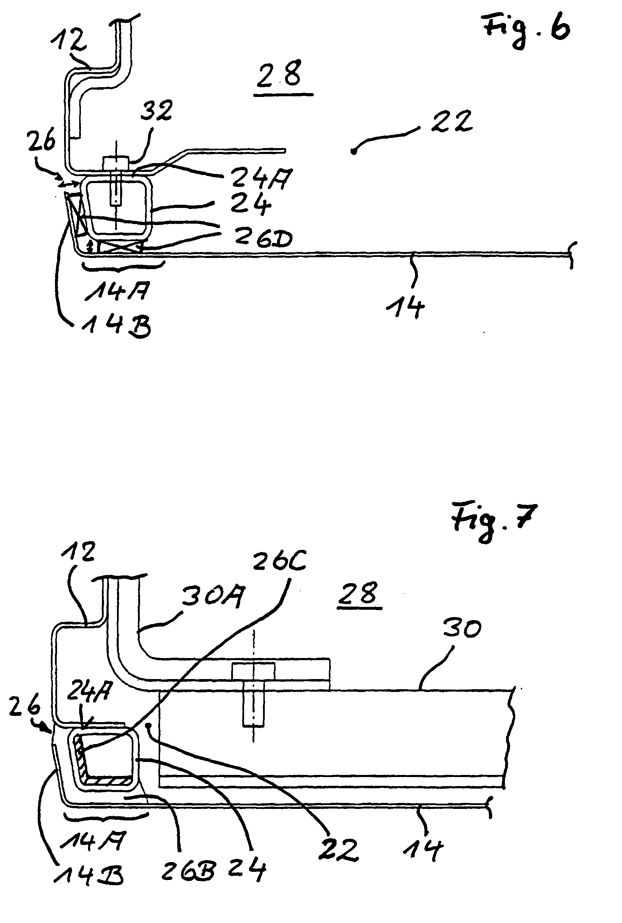

Fig. 7 shows the embodiment of Fig. 3B - with exception of the spacing element, which exists of a heat-sensitive spacer element 26B in Fig. 7, being made of a heat-sensitive plastic material like a hot-melt or thermoplastic resin. An, e.g. electrically operated, heating means 26C being closely positioned with respect to the heat-sensitive spacer element 26B, allows to detach the outer panel element 14 upon heating action by heating means 26C. - This device and method for disassembling structural or functional parts may be advantageously by used in various other applications, particularly in the field of vehicle building and is - insofar - of own valuable technical meaning - even independently from the invention claimed in Claim 1.

### List of reference numerals

- 10: Vehicle door
- 12: Support element
- 12A: Outside
- 14: Outer panel element
- 14A: Edge zone
- 14B: Flanges
- 16: Interior panel element
- 18: Hinge
- 20: Closure element
- 22: Service opening
- 24: Stiffening element
- 24': Shaft reinforcement
- 24A: Sealing surface
- 26B: Heat-sensitive spacer elements
- 26C: Heating means
- 26D: Mechanical spacer means
- 26: Spacing element
- 26A: Run-off surfaces
- 28: Hollow chamber
- 30: Side-impact beam
- 30A: Angle brackets
- 32: Bolts
- 34: Drainage holes
- 36: Window pane

## Claims

1. Vehicle door consisting of at least one support element (12), at least one outer panel element (14) and optionally an interior panel element (16), in which the support element (12) contains at least one hinge, hinge plate or similar moving element (18) and/or a closure element (20) or the support element (12) is or can be connected to the latter, wherein the support element (12) has a service opening (22) on its outer side (12A) and the service opening (22) can be closed off by means of the outer panel element (14), in particular, with the support element (12) already installed in the vehicle,
**characterized in that** the outer panel element (14) is or can be provided in at least part of its edge zones (14A) with an spacing element (26) having adjustable dimensions for precisely positioned fastening of the outer panel element (14) to the support element (12).

2. Vehicle door according to Claim 1, **characterized in that** the spacing element (26) is a settable plastic.

3. Vehicle door according to Claim 2, **characterized in that** the settable plastic is a heat-sensitive adhesive.

4. Vehicle door according to Claim 3, **characterized in that** the heat-sensitive adhesive is reversibly heat-sensitive.

5. Vehicle door according to any of the Claims 1 to 4, **characterized in that** the spacer element (26) also serves as connecting element of the outer panel element (14) with the support element (12).

6. Vehicle door according to any of the Claims 1 to 5 **characterized in that** the spacer elements are movable and adjustable in at least two directions of space.

7. Vehicle door according to any of the Claims 1 to 6, **characterized by** at least one elongated, in particular, frame-shaped stiffening element (24) for the outer panel element (14) and/or the support element (12) preferably provided in the edge areas of the service opening.

8. Vehicle door according to Claim 7, **characterized in that** the stiffening element (24) or the outer panel element can be detachably joined to the support element (12).

9. Vehicle door according to Claim 8, **characterized in that** the stiffening element (24) has a continuous sealing surface (24A) with respect to the support element (12).

10. Vehicle door according to any of Claims 1 to 9, **characterized in that** the support element (12) and the outer panel element (14) form, in particular, a completely enclosed hollow chamber (28).

11. Method of assembling a vehicle door according to any of Claims 1 to 10, **characterized in that** the preassembled vehicle door is firstly mounted and adjusted to the vehicle body and thereafter the outer panel element (14) of the door is brought into contact with an spacing element (26) having adjustable dimensions and being intermediate to the mounted door, and thereafter bringing the outer panel element (14) into its final position under adjustment action of the adjustable spacing element (26), and then fixing the adjustable spacing element (26) in its final position or configuration.

12. Method for disassembling the outer panel element (14) of a vehicle door (10) according to any of the Claims 1 to 10, **characterized by** heating a heat-sensitive spacer element 26B being used as said adjustable spacing element (26) with heating means (26C) being mounted to the vehicle door (10) and removing the outer panel element (14) afterwards.

## Patentansprüche

1. Fahrzeugtür bestehend aus mindestens einem Tragelement (12), mindestens einem Außenhautelement (14) und gegebenenfalls einem inneren Abdeckelement (16), bei welcher das Tragelement (12) mindestens einen Scharnier, eine Scharnierplatte oder ein ähnliches bewegliches Element (18) und/oder ein Schließelement (20) enthält oder das Tragelement (12) mit letzterem verbunden oder verbindbar ist, wobei das Tragelement (12) auf seiner Außenseite (12A) eine Serviceöffnung (22) aufweist und die Serviceöffnung (22) mittels. des Außenhautelements (14) verschließbar ist, insbesondere wenn das Tragelement (12) schon in das Fahrzeug eingebaut ist,
**dadurch gekennzeichnet, dass** das Außenhautelement (14) in zumindest einem Teil seiner Randzonen (14A) mit einem Abstandselement (26) mit justierbaren Dimensionen versehen oder versehbar ist, um eine präzise positionierte Befestigung des Außenhautelements (14) an dem Tragelement (12) zu erreichen.

2. Fahrzeugtür nach Anspruch 1, **dadurch gekennzeichnet, dass** das Abstandselement (26) ein aushärtbarer Kunststoff ist.

3. Fahrzeugtür nach Anspruch 2, **dadurch gekennzeichnet, dass** der aushärtbare Kunststoff ein wärmeempfindlicher Kleber ist.

4. Fahrzeugtür nach Anspruch 3, **dadurch gekennzeichnet, dass** der wärmeempfindliche Kleber reversibel wärmeempfindlich ist.

5. Fahrzeugtür nach einem der Ansprüche 1 bis 4, **dadurch gekennzeichnet, dass** das Abstandselement (26) auch als Element zur Verbindung des Außenhautelements (14) und des Tragelements (12) dient.

6. Fahrzeugtür nach einem der Ansprüche 1 bis 5, **dadurch gekennzeichnet, dass** die Abstandselemente beweglich und in mindestens zwei räumlichen Richtungen einstellbar sind.

7. Fahrzeugtür nach einem der Ansprüche 1 bis 6, **dadurch gekennzeichnet, dass** zumindest ein längliches, insbesondere rahmenförmiges Versteifungselement (24) für das Außenhautelement (14) und/oder das Tragelement (12) vorgesehen ist, welches vorzugsweise in den Randbereichen der Serviceöffnung vorgesehen ist.

8. Fahrzeugtür nach Anspruch 7, **dadurch gekennzeichnet, dass** das Versteifungselement (24) oder das Außenhautelement lösbar mit dem Tragelement (12) verbindbar sind.

9. Fahrzeugtür nach Anspruch 8, **dadurch gekennzeichnet, dass** das Versteifungselement (24) eine kontinuierliche Dichtfläche (24A) bezüglich des Tragelements (12) aufweist.

10. Fahrzeugtür nach einem der Ansprüche 1 bis 9, **dadurch gekennzeichnet, dass** das Tragelement (12) und das Außenhautelement (14) insbesondere einen vollständig umschlossenen Hohlraum (28) bilden.

11. Verfahren zur Montage einer Fahrzeugtür nach einem der Ansprüche 1 bis 10, **dadurch gekennzeichnet, dass** die vormontierte Fahrzeugtür zunächst in dem Fahrzeugaufbau montiert und justiert wird, dass danach das Außenhautelement (14) der Tür in Kontakt mit einem Abstandselement (26) mit justierbaren Dimensionen und in einer Zwischenstellung zu der montierten Tür gebracht wird und dass danach das Außenhautelement (14) unter Justierwirkung des justierbaren Abstandselements (26) in seine Endposition gebracht und dann das justierbare Abstandselement (26) in seiner Endposition oder -konfiguration fixiert wird.

12. Verfahren zur Demontage des Außenhautelements (14) einer Fahrzeugtür (10) nach einem der Ansprüche 1 bis 10, **dadurch gekennzeichnet, dass** ein wärmeempfindliches Abstandselement (26B), welches als justierbares Abstandselement (26) dient, mit einer an der Fahrzeugtür (10) angebrachten Heizeinrichtung (26C) aufgeheizt und danach das Außenhautelement (14) entfernt wird.

## Revendications

1. Portière de véhicule constituée d'au moins un élément de support (12), au moins un élément de panneau extérieur (14), et facultativement un élément de panneau intérieur (16), dans lesquels l'élément de support (12) contient au moins un gond, une plaque à gond ou élément mobile analogue (18) et/ou un élément de fermeture (20) de l'élément de support (12) connecté ou pouvant être connecté à celui-ci, l'élément de support (12) comportant une ouverture de service (22) de son côté extérieur (12A) et cette ouverture de service (22) pouvant être fermée au moyen de l'élément de panneau extérieur (14), en particulier avec l'élément de support (12) déjà installé dans le véhicule,
**caractérisée en ce que**
l'élément de panneau extérieur (14) est muni ou peut être muni, dans une partie au moins de ses zones de bords (14A), d'un élément d'écartement (26) présentant des dimensions réglables pour permettre une fixation positionnée avec précision de l'élément de panneau extérieur (14) par rapport à l'élément de support (12).

2. Portière de véhicule selon la revendication 1,
**caractérisée en ce que**
l'élément d'écartement (26) est en matière plastique durcissable.

3. Portière de véhicule selon la revendication 2,
**caractérisée en ce que**
la matière plastique durcissable est un adhésif sensible à la chaleur.

4. Portière de véhicule selon la revendication 3,
**caractérisée en ce que**
l'adhésif sensible à la chaleur est sensible à la chaleur de manière réversible.

5. Portière de véhicule selon l'une quelconque des revendications 1 à 4,
**caractérisée en ce que**
l'élément d'écartement (26) sert également d'élément de liaison de l'élément de panneau extérieur (14) avec l'élément de support (12).

6. Portière de véhicule selon l'une quelconque des revendications 1 à 5,
**caractérisée en ce que**
les éléments d'écartement sont mobiles et réglables dans au moins deux directions de l'espace.

7. Portière de véhicule selon l'une quelconque des revendications 1 à 6,
**caractérisée en ce qu'**
au moins un élément de raidissement allongé, en particulier en forme de cadre (24), est prévu pour l'élément de panneau extérieur (14) ; et/ou l'élément de support (12) est de préférence prévu dans les zones de bords de l'ouverture de service.

8. Portière de véhicule selon la revendication 7,
**caractérisée en ce que**
l'élément de raidissement (24) de l'élément de panneau extérieur peut être relié de manière amovible à l'élément de support (12).

9. Portière de véhicule selon la revendication 8,
**caractérisée en ce que**
l'élément de raidissement (24) comporte une surface d'étanchéité continue (24A) par rapport à l'élément de support (12).

10. Portière de véhicule selon l'une quelconque des revendications 1 à 9,
**caractérisée en ce que**
l'élément de support (12) et l'élément de panneau extérieur (14) forment en particulier une chambre creuse complètement fermée (28).

11. Procédé de montage d'une portière de véhicule selon l'une quelconque des revendications 1 à 10,
**caractérisé en ce que**
la portière de véhicule pré-assemblée est tout d'abord montée et réglée sur la carrosserie du véhicule ;
l'élément de panneau extérieur (14) de la portière est ensuite amené en contact avec un élément d'écartement de dimensions réglables (26) placé dans une position intermédiaire par rapport à la portière montée ;
l'élément de panneau extérieur (14) est ensuite amené dans sa position finale sous l'effet de réglage de l'élément d'écartement réglable (26) ; et
l'élément d'écartement réglable (26) est enfin fixé dans sa position ou configuration finale.

12. Procédé de démontage de l'élément de panneau extérieur (14) d'une portière de véhicule selon l'une quelconque des revendications 1 à 10,
**caractérisé en ce qu'**
on chauffe un élément d'écartement sensible à la chaleur (26B) utilisé comme élément d'écartement réglable (26), par un moyen de chauffage (26C) monté sur la portière de véhicule (10), et l'on retire ensuite l'élément de panneau extérieur (14).
